# EUROPEAN PATENT SPECIFICATION

(11) **EP 1 933 665 B1**
(45) Date of publication and mention of the grant of the patent: **25.03.2009**
(21) Application number: 06809502.5
(22) Date of filing: 04.10.2006
(51) Int. Cl.: A46B 15/00

(54) **MAGNETIC ACTUATED WEAR INDICATOR FOR PERSONAL CARE APPLIANCES**
MAGNETISCH BETÄTIGTER VERSCHLEISSINDIKATOR FÜR KÖRPERPFLEGEGERÄTE
INDICATEUR D'USURE MAGNETIQUE POUR APPAREILS DE SOINS PERSONNELS

(30) Priority: 04.10.2005 US 723385 P
(43) Date of publication of application: 25.06.2008
(73) Proprietor: Koninklijke Philips Electronics N.V., 5621 BA Eindhoven (NL)
(72) Inventor: WIELSTRA, Ytsen, NL-5621 BA Eindhoven (NL)
(74) Representative: Uittenbogaard, Frank
(86) International application number: PCT/IB2006/053636
(87) International publication number: WO 2007/039879

(56) References cited:
- WO-A-96/01172
- WO-A-20/04002267
- WO-A2-20/04018161
- US-A- 5 603 161
- US-A- 5 906 834

## Description

This invention relates generally to personal care appliances, and more specifically concerns a wear indicator for such an appliance, such as for a brushhead portion of a power toothbrush.

It is typically important for those personal care appliances having a workpiece which will deteriorate and lose effectiveness after a certain number of uses to incorporate a reliable wear indicator within the appliance which indicates clearly to the user that it is time to replace the workpiece. It is important that the indication be reliable relative to the actual physical condition of the workpiece and further that the indication be clear and readily interpretable by a user. Still further, it is usually important that a wear indicator be convenient to implement in a particular appliance of interest and not add significant additional expense to the appliance.

Wear indicators are well known for various appliances. These include devices which count the number of uses of the appliance, as well as devices which detect actual physical wear on the workpiece which occurs because of use. For example, in the case of a toothbrush, as the bristles wear away during use, various indicator arrangements within the bristles are revealed, including a different color, as the wear on the bristles reaches a selected depth.

Accordingly, it is desirable to have a workpiece wear indicator which is both reliable, i.e. the indication provided correlates with the actual physical condition of the workpiece, and which is clearly interpretable by a user that it is time to replace the workpiece. As indicated above, one example of such a personal care appliance and a workpiece associated therewith which uses a wear indicator is a brushhead portion of an electric toothbrush as known from US-A-5 906 834 or WO 2004/002267. Another example is a blade or cutting head on an electric shaver as known from US-A-5 603 161. Other examples will readily occur to one skilled in the art.

Accordingly, the invention is a wear indicator for a workpiece portion of a personal care appliance, comprising a first member having magnetic particles therein, wherein the member is characterized by a reaction to repeated contact with water over time such that as the appliance is used, the layer member gradually changes state, permitting the magnetic particles therein to become oriented, under the influence of an adjacent magnet member, into a recognizable image, which indicates that the workpiece should be replaced; and a magnet member positioned close to the first member, such that it can influence the position of the magnetic particles in the first member into said recognizable image upon a sufficient change of state from the original condition of the first member, wherein the appearance of said recognizable image indicates that the workpiece should be replaced.
Figure 1 shows a personal care appliance, in particular an electric toothbrush, showing in general the position of the wear indicator of the present invention.
Figures 2A and 2B show a first embodiment of the present wear indicator.
Figure 3 shows a representative image which is presented to the user when the wear indicator determines that it is time to replace the workpiece.
Figure 4A and 4B show a second embodiment of the wear indicator.

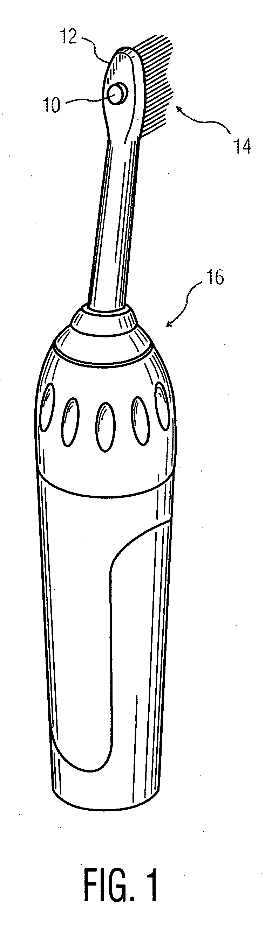

Figure 1 shows a wear indicator of the present invention incorporated in an electric toothbrush. The wear indicator, shown generally at 10, is embedded into a base portion 12 ofbrushhead 14, which comprises a part of a conventional electric toothbrush 16. The wear indicator 10 can be used for a wide variety of electric toothbrush arrangements. Also, it should be understood that the wear indicator 10 described herein can be used on other personal care appliances which include a workpiece which requires periodic replacement for continuing effective action.

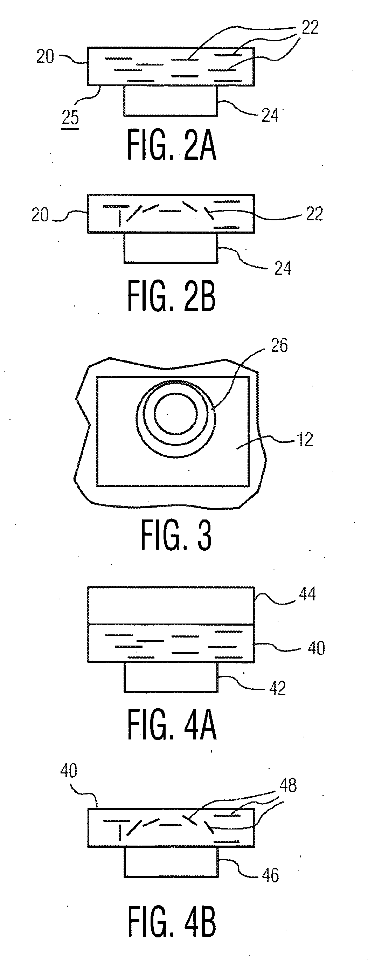

A first embodiment of the wear indicator 10 is shown in Figures 2A and 2B. The wear indicator includes a water-soluble material member/layer 20. The size of layer 20 can vary, but in one embodiment, it could be 10 100 microns thick. The primary requirement is that the magnetic particles have space to move (reorient) when a magnetic field forces the particles into a different orientation and such that the effect is visible.

Examples of appropriate materials comprising the water-soluble member 20 include water-soluble polymers, such as polyvinyl alcohol (PVA), polyvinyl pyrrolidon (PVP) and other similar materials. Layer 20 has magnetic particles 22 embedded therein. The magnetic particles 22 can comprise basically any material which is responsive to magnetic action, such as various iron oxides and other materials, including specialized pigments which respond to magnetic action, such as iron oxide coated flake-like pigments. The particles 22 are embedded in member 20 in a random fashion with no particular arrangement or oriented state.

The wear indicator 10 also includes a magnet member 24 positioned adjacent to or in contact with the lower surface 25 of member 20.

During use of the appliance, the member/layer 20 will come into contact with water. Member 20 becomes wet and either begins to slowly dissolve or to swell. At a reliable point, following sufficient dissolution/swelling of the material in layer 20, due to repeated contacts with water as a result of repeated uses, the particles 22 will gradually move/reorient themselves under the influence of magnetic element 24, until they form a three-dimensional image, along the magnetic field lines produced by the magnetic member. The size of the magnet and the orientation of the magnetic poles will determine the visual effect. The three-dimensional image indicates clearly to the user that replacement of the workpiece, e.g. the toothbrush brushhead, is appropriate. Such an image is shown at 26 in Figure 3. The round 3 D image 26 is produced by the use of a round magnet. Other image configurations can be produced using different shaped magnet elements. Figure 2B shows the reorientation of particles 22 into the 3 D image of Figure 3, from the planar arrangement shown in Figure 2A.

The sensitivity of the wear indicator 10 can be changed in several ways. First, the sensitivity of member 20 can be varied by adjusting the chemical composition of the material and, in the case of polymers, adjusting the crosslink density. This will change the rate/manner of dissolution/swelling of the water-soluble member, so as to provide an accurate, reliable indication of wear of the workpiece. The strength of the magnet member 24 can also be varied. Further, different magnet configurations can be used which have the capability of producing particular image forms.

Figures 4A and 4B show another embodiment of the invention, which includes a structure similar to Figures 2A and 2B, with a water-soluble, magnetic particle-containing member 40 and a magnet member 42. This embodiment includes an upper layer 44 of water-soluble material on top of member 40. Member 44 has no magnetic particles, but is characterized by gradually dissolving upon contact with water, and hence delaying the exposure of the active member 40 (with the magnetic particles) to water. The thickness of the delay layer 44 can be adjusted so that the unit as a whole can provide an accurate indication of wear, based on use. Figure 4B shows the delay layer 44 completely dissolved, and the realignment of magnetic particles 48 within member 40 into a recognizable configuration, such as shown in Figure 3.

Hence, it should be understood that various arrangements of water-soluble elements can be used in combination with a magnetic member to provide a clear and accurate indication of workpiece wear for the purpose of an appropriate, replacement time.

Although a preferred embodiment of the invention has been disclosed for purposes of illustration, it should be understood that various changes, modifications and substitutions can be incorporated within in the invention without departing from the scope of the invention which is defined by the claims which follows.

## Claims

1. A wear indicator (10) for a workpiece portion of a personal care appliance comprising: a first layer member (20) which gradually changes state by a reaction to repeated contact with water over time such that as the appliance is used, **characterised in that** the layer member has magnetic particles (22) therein, so that, by a reaction to repeated contact with water over time such that as the appliance is used, the magnetic particles (22) become oriented, under the influence of an adjacent magnet member (24), into a recognizable image, which indicates that the workpiece should be replaced; and **in that** the wear indicator comprises a magnet member (24) positioned close to the first layer member (20), such that it can influence the position of the magnetic particles (22) in the first layer member (20) into said recognizable image (26) upon a sufficient change of state from the original condition of the first layer member (20), wherein the appearance of said recognizable image indicates that the workpiece should be replaced.

2. The wear indicator (10) of claim 1, wherein the recognizable image (26) is three-dimensional.

3. The wear indicator (10) of claim 1, wherein the first layer member (20) comprises a material which gradually dissolves upon repeated contact with water, and wherein the first layer member (20) is sufficiently dissolved, after a sufficient number of uses has occurred, to reliably indicate that the workpiece should be replaced, to permit the orientation of the particles in the recognizable image.

4. The wear indicator (10) of claim 1, wherein the first layer member (20) comprises a material which gradually swells upon repeated contact with water, and wherein the first layer member (20) is sufficiently swollen after a sufficient number of uses has occurred to reliably indicate that the workpiece should be replaced, that the orientation of the particles into the recognizable shape can occur.

5. The wear indicator (10) of claim 1, including a second member (40), which is water-soluble, positioned on top of the first member, which delays contact by water with the first layer until after the second layer has dissolved, which occurs after a selected amount of use of the appliance.

6. The wear indicator (10) of claim 1, wherein the appliance is a toothbrush (16) and the workpiece is a brushhead (14) which must be periodically replaced.

7. The wear indicator (10) of claim 6, wherein the wear indicator (10) is positioned on the brushhead (14).

## Patentansprüche

1. Verschleißindikator (10) für ein Werkstückteil eines Körperpflegegeräts, mit: einem ersten Schichtelement (20), welches durch eine Reaktion auf wiederholten Kontakt mit Wasser über den Zeitraum der Verwendung des Geräts graduell seinen Zustand verändert, **dadurch gekennzeichnet, dass** das Schichtelement Magnetteilchen (22) darin aufweist, so dass durch eine Reaktion auf wiederholten Kontakt mit Wasser über den Zeitraum der Verwendung des Geräts die Magnetteilchen (22) unter dem Einfluss eines benachbarten Magnetelements (24) zu einem erkennbaren Bild orientiert werden, welches anzeigt, dass das Werkstück ersetzt werden sollte; und dass der Verschleißindikator ein in der Nähe des ersten Schichtelements (20) positioniertes Magnetelement (24) umfasst, so dass es bei einer ausreichenden Änderung des Zustands von dem ursprünglichen Zustand des ersten Schichtelements (20) die Position der Magnetteilchen (22) in dem ersten Schichtelement (20) zu dem erkennbaren Bild (26) beeinflussen kann, wobei durch Sichtbarwerden des erkennbaren Bildes angezeigt wird, dass das Werkstück ersetzt werden sollte.

2. Verschleißindikator (10) nach Anspruch 1, wobei das erkennbare Bild (26) dreidimensional ist.

3. Verschleißindikator (10) nach Anspruch 1, wobei das erste Schichtelement (20) ein Material umfasst, welches sich bei wiederholtem Kontakt mit Wasser graduell auflöst, und wobei sich das erste Schichtelement (20) nach Stattfinden einer ausreichenden Anzahl Anwendungen genügend aufgelöst hat, um zuverlässig anzuzeigen, dass das Werkstück ersetzt werden sollte, um die Orientierung der Teilchen in dem erkennbaren Bild zu ermöglichen.

4. Verschleißindikator (10) nach Anspruch 1, wobei das erste Schichtelement (20) ein Material umfasst, welches bei wiederholtem Kontakt mit Wasser graduell quillt, und wobei das erste Schichtelement (20) nach Stattfinden einer ausreichenden Anzahl Anwendungen genügend gequollen ist, um zuverlässig anzuzeigen, dass das Werkstück ersetzt werden sollte, dass die Orientierung der Teilchen zu der erkennbaren Form stattfinden kann.

5. Verschleißindikator (10) nach Anspruch 1 mit einem auf der Oberseite des ersten Elements positionierten, zweiten Element (40), welches wasserlöslich ist und den Kontakt durch Wasser mit der ersten Schicht verzögert, bis sich die zweite Schicht aufgelöst hat, was nach einer ausgewählten Menge von Anwendungen des Geräts stattfindet.

6. Verschleißindikator (10) nach Anspruch 1, wobei das Gerät eine Zahnbürste (16) und das Werkstück ein Bürstenkopf (14) ist, der regelmäßig ersetzt werden muss.

7. Verschleißindikator (10) nach Anspruch 6, wobei der Verschleißindikator (10) auf dem Bürstenkopf (14) positioniert ist.

## Revendications

1. Indicateur d'usure (1) pour une partie de pièce de fabrication d'un appareil de soins personnels, comprenant : un premier élément en couche (20) qui change progressivement d'état par une réaction par contact répété avec de l'eau au fil du temps quand l'appareil est utilisé, **caractérisé en ce que** l'élément en couche comporte des particules magnétiques (22) dans celui-ci, de telle sorte que, par une réaction par contact répété avec de l'eau au fil du temps quand l'appareil est utilisé, les particules magnétiques (22) deviennent orientées, sous l'influence d'un élément magnétique (24) adjacent dans une image reconnaissable, qui indique que la pièce de fabrication doit être remplacée ; et **en ce que** l'indicateur d'usure comprend un élément magnétique (24) positionné près du premier élément en couche (20), de telle sorte qu'il puisse influencer la position des particules magnétiques (22) dans le premier élément en couche (20) dans ladite image reconnaissable (26) en cas de changement d'état suffisant à partir de la condition d'origine du premier élément en couche (20), dans lequel l'apparence de ladite image reconnaissable indique que la pièce de fabrication doit être remplacée.

2. Indicateur d'usure (10) selon la revendication 1, dans lequel l'image reconnaissable (26) est tridimensionnelle.

3. Indicateur d'usure (10) selon la revendication 1, dans lequel le premier élément en couche (20) comprend un matériau qui se dissout progressivement en cas de contact répété avec l'eau, et dans lequel le premier élément en couche (20) est dissous suffisamment, après la survenue d'un nombre suffisant d'utilisations, pour indiquer de façon fiable que la pièce de fabrication doit être remplacée, pour permettre l'orientation des particules dans l'image reconnaissable.

4. Indicateur d'usure (10) selon la revendication 1, dans lequel le premier élément en couche (20) comprend un matériau qui gonfle progressivement en cas de contact répété avec l'eau, et dans lequel le premier élément en couche (20) est suffisamment gonflé après la survenue d'un nombre suffisant d'utilisations pour indiquer de façon fiable que la pièce de fabrication doit être remplacée, pour que l'orientation des particules dans la forme reconnaissable puisse survenir.

5. Indicateur d'usure (10) selon la revendication 1, comprenant un second élément (40) soluble dans l'eau, positionné au-dessus du premier élément, qui retarde le contact par l'eau avec la première couche jusqu'à ce que la seconde couche se soit dissoute, ce qui survient après un nombre sélectionné d'utilisations de l'appareil.

6. Indicateur d'usure (10) selon la revendication 1, dans lequel l'appareil est une brosse à dents (16) et la pièce de fabrication est une tête de brosse (14) qui doit être remplacée périodiquement.

7. Indicateur d'usure (10) selon la revendication 6, dans lequel l'indicateur d'usure (10) est positionné sur la tête de brosse (14).
